## Europäisches Patentamt

## European Patent Office

## Office européen des brevets

(19)

(11) **EP 1 303 032 A2**

(12) **EUROPÄISCHE PATENTANMELDUNG**

(43) Veröffentlichungstag:
16.04.2003 Patentblatt 2003/16

(51) Int Cl.⁷: **H02M 3/337**, H02M 3/28

(21) Anmeldenummer: 02102290.0

(22) Anmeldetag: 03.09.2002

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: 23.10.2001 DE 10152194
04.09.2001 DE 10143251
04.10.2001 DE 10148932

(71) Anmelder:
• **Philips Corporate Intellectual Property GmbH
20099 Hamburg (DE)**
Benannte Vertragsstaaten:
**DE**

• **Koninklijke Philips Electronics N.V.
5621 BA Eindhoven (NL)**

(72) Erfinder:
• **Reinhold, Elferich
52088, Aachen (DE)**
• **Dürbaum, Thomas
52088, Aachen (DE)**
• **Raets, Hubert
52088, Aachen (DE)**

(74) Vertreter: **Volmer, Georg, Dipl.-Ing. et al
Philips Corporate Intellectual Property GmbH,
Postfach 50 04 42
52088 Aachen (DE)**

(54) **Regelvorrichtung für einen resonanten Konverter**

(57) Ein resonanter Konverter, ein Regelverfahren für einen resonanten Konverter und ein Schaltnetzteil mit einem resonanten Konverter werden vorgestellt. Der Konverter umfasst einen Wechselrichter zur Erzeugung einer Wechselspannung, durch die eine Resonanzanordnung mit einer Kapazität und einem Transformator gespeist ist. Die Schaltung sieht zwei Typen von Sekundäreinheiten vor, umfassend jeweils eine Sekundärwicklung des Transformators und mindestens ein Gleichrichtelement. Sekundäreinheiten ersten und zweiten Typs unterscheiden sich hierbei durch entgegengesetzte Orientierung, beispielsweise entgegengesetzte Wicklungsrichtung oder entgegengesetzt orientierte Beschaltung. Ausgangsseitig werden mindestens zwei Ausgangsspannungen geliefert, von denen eine erste Ausgangsspannung als direkter Ausgang von einer Sekundäreinheit ersten Typs gespeist wird und eine zweite Ausgangsspannung als "Stapel-Ausgang" von einer Sekundäreinheit ersten und einer Sekundäreinheit zweiten Typs gespeist ist, bevorzugt als Reihen-Schaltung dieser Sekundäreinheiten. Hierbei ist der Stapel-Ausgang zur Lieferung größerer Leistung, der direkte Ausgang für geringere Ausgangsleistungen ausgelegt. Mit einer Regeleinrichtung können die beiden Ausgangsspannungen getrennt voneinander geregelt werden, wobei die Regeleinrichtung die Ansteuerung des Wechselrichters, bevorzugt zur Lieferung einer pulsweitenmodulierten Spannung, vorgibt. Beispielsweise durch geeignete Wahl von Frequenz und Tastgrad der pulsweitenmodulierten Spannung können die Spannungen unabhängig voneinander auf Sollwerte geregelt werden.

Fig.1

EP 1 303 032 A2

**Beschreibung**

Die Erfindung betrifft einen resonanten Konverter, ein Regelverfahren für einen resonanten Konverter und ein Schaltnetzteil.

Ein als Gleichspannungswandler arbeitender geschalteter Konverter formt eine eingangsseitige Gleichspannung in eine oder mehrere ausgangsseitige Gleichspannungen um, indem die eingangsseitige Gleichspannung zunächst zerhackt, d. h. in eine geschaltete Wechsel-Spannung umgeformt wird und mit dieser geschalteten Wechselspannung eine Resonanzanordnung mit mindestens einer Kapazität gespeist wird, die die Primärseite eines Transformators umfasst. Sekundärseitig umfasst der Transformator eine oder mehrere Wicklungen, deren Spannungen zur Erzeugung von Ausgangsgleichspannungen gleichgerichtet werden.

Bekannte Schaltnetzteile umfassen eine Netzteileingangsschaltung zum Anschluss an das Stromversorgungsnetz und einen geschalteten Konverter. Die Netzteileingangsschaltung stellt eine Zwischenkreisgleichspannung zur Verfügung, durch die der geschaltete Konverter gespeist wird. Die Zwischenkreisgleichspannung wird durch den Konverter in eine oder mehrere Ausgangsgleichspannungen umgeformt.

Es sind eine Vielzahl von Schaltungen für geschaltete Konverter bekannt. Dies umfasst außer resonanten Konvertern auch Schaltungen, bei denen keine Resonanzanordnung verwendet wird. Mit geschalteten Konvertern lassen sich kostengünstige, kleine und leichte Stromversorgungsgeräte/Schaltnetzteile herstellen, die beispielsweise in Konsumelektronikgeräten wie Set-Top-Boxen, Satelliten-Receivern, Fernsehgeräten, Computermonitoren, Videorecordern, Compact-Audioanlagen etc. vorteilhaft einsetzbar sind. Bei diesen Anwendungen werden häufig Konverter benötigt, die aus einer Eingangsgleichspannung mehrere Ausgangsspannungen erzeugen.

Üblicherweise wird eine der Ausgangsspannungen auf einen Sollwert geregelt. Bei Konvertern des Standes der Technik, die mehrere Ausgangsspannungen liefern, wobei jeder der Ausgangsspannungen eine Sekundärwicklung des Transformators zugeordnet ist, können verschiedene Ausgangsspannungen nicht unabhängig voneinander geregelt werden. Bei solchen Schaltungen ist eine Regelvorrichtung nur für eine der Ausgangsspannungen vorgesehen. Es wird hierbei davon ausgegangen, dass die anderen Spannungen - die über das Verhältnis der Windungszahlen mit der einen geregelten Spannung zusammenhängen - mit dieser "mitgeregelt" werden. Dies hat bei stark unterschiedlicher Belastung an den einzelnen Ausgängen jedoch große Nachteile.

Eine bekannte Topologie eines Konverters umfasst den sog. lastresonanten Konverter. Bei einer bekannten Schaltung hierfür wird als Wechselrichter eine mit einer Gleichspannung gespeiste Halbbrücke verwendet, die eine Reihenschaltung aus einer Resonanzkapazität und der Primärseite eines Transformators speist. Die Resonanzkapazität bildet gemeinsam mit der Streuinduktivität des Transformators sowie ggfs. weiteren, auch sekundärseitig angeordneten Induktivitäten oder Kapazitäten eine Resonanzanordnung. Sekundärseitig besitzt der lastresonante Konverter eine oder mehrere Sekundärwindungen. So wird eine Anzahl von Ausgangsgleichspannungen geliefert, die üblicherweise nach Gleichrichtung noch mindestens mit einem kapazitiven Filter gefiltert werden.

Zur Regelung der Ausgangsspannung eines solchen resonanten Konverters ist es bekannt, die Ansteuerung des Wechselrichters zu verändern. Die Schalter des Wechselrichters werden hierbei so gesteuert, dass eine Wechselspannung, in vielen Fällen eine pulsweitenmodulierte Spannung, mit vorgegebenen Parametern (z. B. Frequenz) erzeugt wird. Durch Variation der Frequenz dieser Spannung kann der Betrag der Ausgangsspannung geregelt werden. Hierbei erhöht sich die Ausgangsspannung, je näher die Frequenz der an die Resonanzfrequenz der Resonanzanordnung heranrückt. Für LLC-Konverter ist ein Betrieb im überkritischen Bereich üblich, d. h. Speisung der Resonanzanordnung mit einer Spannung, deren Frequenz oberhalb der Resonanzfrequenzen liegt. In diesem Betriebsfall kann die Ausgangsspannung erhöht werden, indem die Frequenz der Spannung verringert wird. Bei bekannten lastresonanten Konvertern kann hierbei nur eine Ausgangsspannung direkt geregelt werden. Weitere Ausgangsspannungen sind mit der direkt geregelten Ausgangsspannung über das Verhältnis der Windungszahlen gekoppelt und werden so "mitgeregelt".

Der in Konsumelektronikgeräten dominierende Konvertertyp ist der Sperrwandler (Flyback-Konverter). Hierbei handelt es sich um einen nicht resonant aufgebauten Wandler. Primärseitig wird als Wechselrichter in der Regel nur ein Schaltelement benötigt. An jedem seiner Ausgänge sieht der Sperrwandler Einweg-Gleichrichtung vor. Einer der Ausgänge ist unmittelbar regelbar. Falls beim Sperrwandler eine zweite Ausgangsspannung benötigt wird, die unmittelbar geregelt sein muss, ist es bekannt, an einem der Ausgänge des Sperrwandlers einen weiteren Konverter, bezeichnet als Step-down-Konverter oder Buck-Konverter, anzuschließen, der durch die Ausgangsspannung des ersten Sperrwandlers gespeist wird und die zweite Ausgangsspannung mit einer separaten Regelung liefert. Eine solche Schaltung mit zwei Wandlern ist aber sehr aufwendig.

Eine andere Erweiterung der Sperrwandler-Topologie, die zwei geregelte Ausgangsspannungen zur Verfügung stellt, ist der sog. "Double forward-flyback"-Konverter. Eine entsprechende Topologie ist beispielsweise beschrieben in IEEE-PESC 1988, Seite 142 "A Complete Study of the Double Forward - Flyback Converter" von J. Sebastian et. al.. Wie bei der zugrundeliegenden Flyback-Topologie handelt es sich nicht um eine resonante Anordnung, sondern die primärseitige Wechselspannung, die mit einem einfachen Schalter erzeugt wird, speist direkt die Primärseite des Transformators. Sekundärseitig sind hier zwei Sekundäreinheiten, jeweils gebildet aus einer Sekundärwicklung des Transformators und einem Einweg-Gleichrichtelement (Diode) vorgesehen. Die hiervon gelieferten Sekundärspannungen werden bei einer Sekundäreinheit kapazitiv und bei der anderen Sekundäreinheit induktiv gefiltert. So ist es möglich, eine (induktiv gefilterte) Ausgangsspannung über den Tastgrad der pulsweitenmodulierten Spannung und die andere (kapazitiv gefilterte) Ausgangsspannung über die Frequenz der pulsweitenmodulierten Spannung zu regeln. Allerdings weist diese "hart schaltende" Topologie erhebliche Schaltverluste auf.

Bei modernen Konsumelektronikgeräten ist es immer häufiger notwendig, dass mehrere Versorgungsspannungen geliefert werden, wobei es Ausgänge mit niedriger Leistungsentnahme und Ausgänge mit höherer Leistungsentnahme gibt.

Es ist Aufgabe der Erfindung, einen resonanten Konverter, ein Regelverfahren und ein Schaltnetzteil anzugeben, bei dem an mindestens zwei Ausgängen, die zur Lieferung unterschiedlich großer Leistungen ausgelegt sind, vorgegebene Spannungen geliefert werden können.

Diese Aufgabe wird gelöst durch einen resonanten Konverter nach Anspruch 1, ein Regelverfahren nach Anspruch 10 sowie ein Schaltnetzteil nach Anspruch 11. Abhängige Ansprüche beziehen sich auf vorteilhafte Ausführungsformen der Erfindung.

Erfindungsgemäß wird eine resonante Topologie vorgeschlagen, d. h. durch einen Wechselrichter wird eine Resonanzanordnung gespeist, die einen Serienkondensator und die Primärseite eines Transformators umfasst. Auch weitere, sekundärseitige Elemente können Teil der Resonanzanordnung sein. Bei einer solchen resonanten Topologie können die Sekundärspannungen über die Frequenz der primärseitigen Wechselspannung geregelt werden. Durch überkritischen Betrieb kann bei einem solchen resonanten Konverter erreicht werden, dass sich die Resonanzanordnung an der Quelle wie eine induktive Last verhält, so dass ein Schalten ohne Verluste ("zero voltage switching") möglich ist.

Erfindungsgemäß sind zwei Arten von Sekundäreinheiten vorgesehen, die jeweils mindestens eine Sekundärwicklung des Transformators und mindestens ein Gleichrichtelement umfassen. Eine erste Sekundäreinheit (bzw. ein erster Typ von Sekundäreinheiten) und eine zweite Sekundäreinheit (bzw. ein zweiter Typ von Sekundäreinheiten) sind hierbei entgegengesetzt orientiert. Unter der Orientierung wird die Wicklungsorientierung im Zusammenhang mit der Beschaltung mit dem Gleichrichtelement verstanden.

Als Beispiel können sich zwei Sekundäreinheiten entgegengesetzten Typs dadurch unterscheiden, dass bei ansonsten gleicher Beschaltung die Wicklungsorientierung auf dem gemeinsamen Transformatorkern entgegengesetzt ist. Ebenso ist es möglich, bei gleicher Wicklungsorientierung zweier Sekundärwicklungen die Sekundäreinheit ersten und zweiten Typs durch jeweils umgekehrte Beschaltung zu unterscheiden. Unter Beschaltung wird der Anschluss des Gleichrichtelements verstanden, bei dem es sich bevorzugt um ein lediglich in einem Zweig eingebrachtes Einweg-Gleichrichtelement, beispielsweise eine Diode, handelt.

Durch die Unterscheidung in zwei gegensätzlich orientierte Typen von Sekundäreinheiten verhalten sich je nach Anregung die beiden Sekundäreinheiten unterschiedlich. Beim Betrieb mit einer Wechselspannung werden die Sekundäreinheiten ersten und zweiten Typs aufeinanderfolgend bestromt. Bei der hier verwendeten Definition der Typen von Sekundäreinheiten fließt im Wesentlichen während eines negativen Spannungshubs an der Primärseite des Transformators ein Strom durch die Sekundäreinheit ersten Typs. Während des positiven Spannungshubs an der Primärseite des Transformators fließt entsprechend ein Strom durch die Sekundäreinheit zweiten Typs. Wie nachfolgend im Detail erläutert wird, ist es möglich, diese Unterscheidung gezielt zu nutzen, wobei durch entsprechende gezielte Anregung mehr oder weniger Leistung von einer Sekundäreinheit ersten oder zweiten Typs geliefert wird.

Durch Gleichrichtung an dem Gleichrichtelement entstehen an den Sekundäreinheiten Sekundärspannungen. Diese können - üblicherweise nach (bevorzugt kapazitiver) Filterung - direkt als Ausgangsspannung verwendet werden. Ein solcher Ausgang, bei dem eine Sekundäreinheit alleine den Ausgang speist, wird hier als "direkter Ausgang" bezeichnet. Eine andere Form eines Ausgangs, hier bezeichnet als "Stapel-Ausgang" sieht vor, dass die Ausgangsspannung von mindestens einer Sekundäreinheit ersten Typs und mindestens einer Sekundäreinheit zweiten Typs, die in Reihe geschaltet sind, geliefert wird. Erfindungsgemäß wird die erste Ausgangsspannung als "direkter Ausgang" mit einer Sekundäreinheit ersten Typs realisiert, während eine zweite Ausgangsspannung als "Stapel-Ausgang" einer Sekundäreinheit ersten und einer Sekundäreinheit zweiten Typs realisiert ist. Hierbei ist der erste Ausgang (direkter Ausgang) zur Lieferung einer geringeren Leistung und der zweite Ausgang (Stapel-Ausgang) zur Lieferung einer höheren Leistung ausgelegt.

Hierbei wird bevorzugt, dass, wenn nur die beiden vorgenannten Ausgänge vorhanden sind, das Verhältnis der Nennleistung am Stapel-Ausgang zu der Nennleistung am direkten Ausgang im Bereich von 1,5: 1 bis 10:1 liegt. Die Auslegung soll bevorzugt so erfolgen, dass im Nennbetrieb die beiden Halbwellen nicht sehr stark unterschiedlich belastet werden. Bei zwei Ausgängen und vollkommen symmetrischer Auslegung ist theoretisch ein Verhältnis der Nennausgangsleistungen von 3:1 zugunsten des Stapel-Ausgangs ideal. Aufgrund der symmetrischen Auslegung sind dann beide Halbwellen gleichmäßig belastet, so dass sich ein Tastgrad von 50 % einstellt. Je nach Anforderung an den Konverter kann es notwendig sein, dass dieser in der Lage sein soll, je eine der beiden Ausgangsleistungen zu Null werden zu lassen bei voller Leistung am jeweils anderen Ausgang. Falls der Konverter mehrere Ausgänge, beispielsweise zwei direkte Ausgänge und einen Stapel-Ausgang aufweist, so sind diese hinsichtlich der Nennleistungen so auszulegen, das eine in etwa gleichmäßige Belastung der Halbwellen erreicht wird.

Für die sekundärseitige Schaltung des resonanten Konverters sind verschiedene Ausgangskonfigurationen möglich. So kann einerseits die Sekundäreinheit ersten Typs, die in Form eines direkten Ausgangs für die erste Ausgangsspannung vorgesehen ist, gleichzeitig auch zusammen mit einer Sekundäreinheit zweiten Typs in Form eines Stapel-Ausgangs für die zweite Ausgangsspannung verschaltet sein. Da jede der beiden Sekundäreinheiten lediglich ein Einweg-Gleichrichtelement (Diode) aufweist, kommt in diesem Fall die Gesamtschaltung mit lediglich zweien solcher Leistungshalbleiter aus, so dass ein besonders kostengünstiger Aufbau ermöglicht wird.

Alternativ ist es möglich, dass der direkte Ausgang für die erste Ausgangsspannung von einer Sekundäreinheit (ersten Typs) gebildet und der Stapel-Ausgang für die zweite Ausgangsspannung von zwei weiteren Sekundäreinheiten (einer Sekundäreinheit ersten und einer Sekundäreinheit zweiten Typs) gebildet wird. In diesem Fall werden drei Ausgangsgleichrichter benötigt. Hierbei kann es vorgesehen sein, dass der direkte Ausgang vom Stapel-Ausgang vollständig galvanisch getrennt ist.

Gemäß einer Weiterbildung der Erfindung ist eine Regeleinrichtung zur Regelung sowohl der ersten als auch der zweiten Ausgangsspannung jeweils auf einen Sollwert vorgesehen. So kann die gewünschte Ausgangsspannung auch bei Störgrößen wie wechselnde Belastung etc. geliefert werden. Eine solche Regeleinrichtung nimmt entsprechende Messgrößen des resonanten Konverters auf. Entsprechend dem erfindungsgemäßen Regelverfahren steuert die Regeleinrichtung den Wechselrichter an. Der Wechselrichter liefert eine geschaltete Wechselspannung, bevorzugt eine pulsweitenmodulierte Spannung von üblicherweise konstanter Amplitude. Zur Regelung der beiden Ausgangsspannungen werden bevorzugt zwei Stellgrößen verwendet, die den Zeitverlauf der pulsweitenmodulierten Spannung vorgeben, beispielsweise Schaltfrequenz und Tastgrad.

Bevorzugt wird ein Modulator verwendet, der ausgehend von Vorgaben der Regelvorrichtung den Wechselrichter ansteuert, indem ein Pulssignal zur Ansteuerung der Schalter des Wechselrichters vorgegeben wird. Als Wechselrichter wird besonders bei geringen Leistungen aus Kostengründen eine Halbbrücke bevorzugt, mit der aus einer Eingangsgleichspannung durch wechselseitiges Schalten zweier Schalter Spannungspulse erzeugt werden. Ebenso ist der Einsatz einer Vollbrücke denkbar.

Mit dem Begriff Regeleinrichtung wird hier zunächst eine funktionale Einheit bezeichnet. Diese kann als integrierte oder diskrete Analog- oder Digitalschaltung realisiert sein. Die Regelung kann aber auch vollständig als auf einem Mikro- oder Signalprozessor ablaufender digitaler Regelalgorithmus implementiert sein, so dass die Regeleinheit nicht notwendig eine separate Baueinheit eines resonanten Konverters bildet.

Ein erfindungsgemäßer resonanter Konverter kann zwei voneinander getrennt regelbare Ausgangsspannungen liefern. Häufig werden z. B. in Konsumelektronikgeräten aber eine größere Anzahl von beispielsweise 10 Ausgangsspannungen benötigt. Werden für eine Anwendung mehr als zwei Ausgangsspannungen benötigt, so werden diese in zwei Gruppen eingeteilt, wobei die Spannungen jeder Gruppe getrennt von den Spannungen der jeweils anderen Gruppe regelbar sind. Die Bildung dieser Gruppen erfolgt hierbei derart, dass Sekundäreinheiten ersten Typs in Form von direkten Ausgängen die Ausgangsspannungen der ersten Gruppe liefern, während die zweite Gruppe von Ausgangsspannungen solche Spannungen umfasst, die durch Sekundäreinheiten sowohl des ersten als auch des zweiten Typs gespeist werden (Stapel-Ausgänge). Alternativ können Sekundäreinheiten des zweiten Typs auch als direkte Ausgänge weitere Ausgangsspannungen der zweiten Gruppe liefern.

Gemäß einer Weiterbildung der Erfindung ist vorgesehen, dass die Regeleinrichtung zur Verarbeitung von Messwerten der ersten und zweiten Ausgangsspannung vorgesehen ist. Diese beiden Ausgangsspannungen, von denen die erste an einem direkten und die zweite an einem Stapel-Ausgang geliefert wird, werden kontinuierlich gemessen und die Messergebnisse der Regeleinrichtung zugeführt, wo sie mit entsprechenden Sollwerten verglichen werden.

Die Regelung der Ausgangsspannungen unabhängig voneinander ist durch Ausnutzen des je nach Anregung verschiedenen Verhalten von Sekundäreinheiten ersten und zweiten Typs möglich. Bei Anregung mit einer pulsweitenmodulierten Spannung kann durch geeignete Vorgabe der Frequenz die Höhe der Ausgangsspannungen insgesamt geregelt werden (Ausnutzung der Resonanzüberhöhung). Durch Vorgabe des Tastgrads können die Sekundärspannungen an Sekundäreinheiten entgegengesetzten Typs gegeneinander erhöht oder verringert werden.

Bei direkter Messung der ersten und zweiten Ausgangsspannung und Bildung entsprechender Regeldifferenzen kann eine Regelung in der Weise erfolgen, dass aus der Regeldifferenz der Ausgangsspannung am Stapel-Ausgang eine Vorgabe für die Frequenz der durch den Wechselrichter erzeugten geschalteten Wechselspannung berechnet wird. Aus der Regeldifferenz der Ausgangsspannung am direkten Ausgang wird eine Vorgabe für den Tastgrad der geschalteten Wechselspannung ermittelt. Die Berechnung von Vorgabewerten für Frequenz und Tastgrad aus den jeweiligen Regeldifferenzen erfolgt bevorzugt durch bekannte eindimensionale Regler, beispielsweise I-, PI- oder PID-Regler.

In einer alternativen Ausführungsform wird die am Stapel-Ausgang gelieferte zweite Ausgangsspannung nicht direkt gemessen und geregelt, sondern es werden die jeweiligen Ausgangsspannungen der Sekundäreinheiten, die den Stapel-Ausgang speisen, jeweils einzeln gemessen und geregelt. In diesem Fall erfolgt indirekt eine Regelung der Ausgangsspannung am Stapel-Ausgang, die bei Reihenschaltung der Summe der einzelnen Ausgangsspannungen an den Sekundäreinheiten entspricht. Diese Konfiguration ist besonders dann vorteilhaft, wenn weitere Ausgänge benötigt werden. Von diesen bilden dann solche Ausgänge, die durch Sekundäreinheiten ersten Typs gespeist werden eine erste und solche, die durch Sekundäreinheiten zweiten Typs gespeist werden eine zweite Gruppe. Die Ausgänge der beiden Gruppen sind dann jeweils innerhalb der Gruppe zusammenhängend, können aber unabhängig von der anderen Gruppe geregelt werden.

Nachfolgend werden Ausführungsformen der Erfindung anhand von Zeichnungen näher beschrieben. In den Zeichnungen zeigen:

Fig. 1      ein Schaltbild einer ersten Ausführungsform eines resonanten Konverters;

Fig. 2      ein Schaltbild eines Teils einer zweiten Ausführungsform eines resonanten Konverters;

Fig. 2a      ein Schaltbild eines Teils einer dritten Ausführungsform eines resonanten Konverters;

Fig. 3a      ein Diagramm mit Darstellung des Zeitverlaufs von Strömen und Spannungen der Schaltung nach Fig. 1 unter idealisierten Annahmen;

Fig. 3b      ein Diagramm entsprechend Fig. 3a mit niedrigerem Tastgrad und erhöhter Frequenz;

Fig. 3c      ein Diagramm entsprechend Fig. 3a, 3b mit höherem Tastgrad und weiter erhöhter Frequenz;

Fig. 4      ein Blockdiagramm einer Ausführungsform einer Regeleinrichtung;

Fig. 5      ein Blockdiagramm eines Frequenzreglers;

Fig. 6      ein Blockdiagramm eines Tastgradreglers.

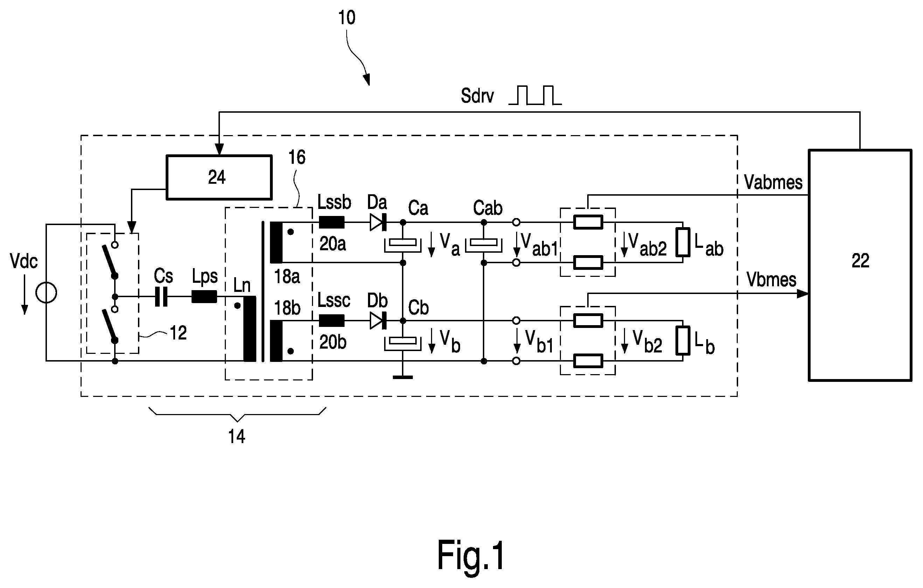

In Figur 1 ist ein Schaltbild einer ersten Ausführungsform eines resonanten Konverters 10 dargestellt. Der resonante Konverter 10 weist einen Wechselrichter 12 auf, ausgeführt als asymmetrisch schaltende Halbbrücke, der eine Resonanzanordnung 14 speist, die aus einer Serienkapazität $C_S$ und der Primärseite eines Transformators 16 aufgebaut ist. In Fig. 1 ist hier eine primärseitige Serien-Induktivität Lps dargestellt. Diese fasst die primärseitige Streuinduktivität des Transformators und eine mögliche externe Serieninduktivität zusammen. Die Hauptinduktivität des Transformators ist als Lh bezeichnet. Die Induktivitäten Lps und Lh bilden mit der Kapazität $C_S$ einen Reihenresonanzkreis. Hier wird vereinfachend die Schaltung mit Resonanzkapazität $C_S$ und der Primärseite des Transformators 16 als Resonanzanordnung 14 bezeichnet. In der Praxis darf selbstverständlich nicht übersehen werden, dass über den Transformator 16 zusätzlich reaktive Elemente der sekundärseitigen Schaltung auf der Primärseite wirksam werden und auch insbesondere das Resonanzverhalten der Resonanzanordnung 14 maßgeblich beeinflussen können.

Der resonante Konverter 10 weist zwei Sekundäreinheiten 20a, 20b auf. Jede der Sekundäreinheiten weist eine Sekundärwicklung 18a, 18b und eine Diode Da, Db auf. Zusätzlich sind Serien-Induktivitäten Lssa und Lssb wirksam. Die am Ausgang der Sekundäreinheiten 20a, 20b anliegenden Sekundärspannungen Va, Vb werden durch Filterkapazitäten Ca, Cb geglättet.

Der resonante Konverter 10 liefert an zwei Ausgängen die beiden Ausgangsspannungen Vab1 und Vb1. An den Ausgängen des Konverters 10 ist über Anschlüsse (z. B. Stecker, Leitungen etc.), gekennzeichnet durch Übergangswiderstände, jeweils eine Last Lab, Lb angeschlossen.

Die beiden Ausgänge des Konverters 10 sind hierbei auf unterschiedliche Weise mit den beiden Sekundäreinheiten 20a, 20b verschaltet. Die Ausgangsspannung Vb1 fällt an einem direkten Ausgang ab. Hier ist direkt die Sekundärspannung Vb an der Sekundäreinheit 20b Ausgangsspannung des Konverters 10.

Der Ausgang des Konverters 10, an dem die Ausgangsspannung Vab1 abfällt, ist hingegen als Stapel-Ausgang der Sekundäreinheiten 20a, 20b ausgeführt. Die Sekundäreinheiten 20a, 20b sind hierbei in Reihe geschaltet, so dass die Ausgangsspannung Vab1 der Summe der Sekundärspannungen Va und Vb entspricht. Die Ausgangsspannung Vab1 wird optional durch eine zusätzliche Filterkapazität Cab gefiltert.

Die Ausgangsspannung Vab1 am Stapel-Ausgang des Konverters 10 ist für höhere Leistungen, die Spannung Vb1 am direkten Ausgang für geringere Leistungen vorgesehen. Im dargestellten Beispiel beträgt das Verhältnis der Nennleistung am Stapelausgang zur Nennleistung am direkten Ausgang 3:1. Hierfür sind die Sekundärwicklungen symmetrisch, d. h. mit gleicher Wicklungszahl ausgelegt.

In Figur 1 unterscheiden sich die Sekundäreinheiten 20a, 20b dadurch, dass die Sekundärwicklungen 18a, 18b auf dem gemeinsamen Kern des Transformators 16 unterschiedliche Wicklungsorientierungen aufweisen. Dies ist in üblicher Weise mit einem Punkt gekennzeichnet. Im übrigen sind die Sekundäreinheiten 20a, 20b identisch, d. h. die jeweilige Sekundärwicklung 20a, 20b ist mit der jeweiligen Gleichrichtdiode Da, Db in gleicher Orientierung beschaltet.

Die untere Sekundäreinheit 20b wird im folgenden als Sekundäreinheit ersten Typs bezeichnet. Die in Figur 1 oben dargestellte Sekundäreinheit 20a wird als Sekundäreinheit zweiten Typs bezeichnet. Wie erwähnt besteht der Unterschied zwischen Sekundäreinheiten ersten und zweiten Typs bei gleicher Beschaltung in der entgegengesetzten Wicklungsorientierung. Derselbe Effekt kann auch erzielt werden, indem bei gleicher Wicklungsorientierung die Beschaltung vertauscht, d. h. die Diode Da bzw. Db am anderen Wicklungsende angeschlossen oder ihre Polung vertauscht wird (nicht dargestellt). Der hierdurch erzielte Effekt ist, dass bei der Sekundäreinheit ersten Typs 20b ein Strom durch die Diode Db im Wesentlichen während des negativen Spannungshubs an der Primärseite des Transformators 16 fließt, während dies bei der Sekundäreinheit zweiten Typs 20a während des positiven Spannungshubs der Fall ist. Dies wird dadurch erzielt, dass innerhalb jeder Sekundäreinheit 20a, 20b die Spannung an der jeweiligen Sekundärwicklung 18a, 18b einweggleichgerichtet wird, wobei bei der Sekundäreinheit ersten Typs 20b nur bei negativem Spannungshub ein Strom über die Diode Db fließen kann, wenn die an der Sekundärwindung 18b auftretende Spannung positiver ist als die Spannung Vb an der Filterkapazität Cb, während beim positiven Spannungshub die Diode Db sperrt. Entsprechend umgekehrt verhält es sich bei der Sekundäreinheit zweiten Typs.

Im Betrieb liefert Wechselrichter 12 eine Wechselspannung, die durch wechselndes Schalten seiner beiden gesteuerten Schalter, beispielsweise realisiert durch FETs, erzeugt wird. Der Wechselrichter 12 wird hierbei in einer Weise angesteuert, dass er eine pulsweitenmodulierte geschaltete Wechselspannung der Resonanzanordnung 14 zuführt.

Die Schalter des Wechselrichters 12 werden durch einen Halbbrückentreiber 24 gesteuert. Dieser wird angesteuert durch eine Regeleinrichtung 22 zur Regelung der Ausgangsspannungen Vab1, Vb1. Die Ausgangsspannungen Vab1, Vb1 werden gemessen. Hierbei kann die Ausgangsspannung jeweils an den Ausgangsanschlüssen gemessen werden. Alternativ kann die Erfassung der Spannungen Vab2, Vb2 an der Last erfolgen. Insbesondere bei hohen Strömen ist dies wesentlich genauer.

Die Ergebnisse der Messungen der Spannungen Vab1, Vb1 werden als Messsignale Vabmes, Vbmes der Regeleinrichtung 22 zugeführt. Die Regeleinrichtung 22 vergleicht die gemessenen Spannungssignale mit Sollwerten (nicht dargestellt) und steuert den Wechselrichter 12 so an, dass die Ausgangsspannungen Va, Vb auf die gewünschten Sollwerte geregelt werden.

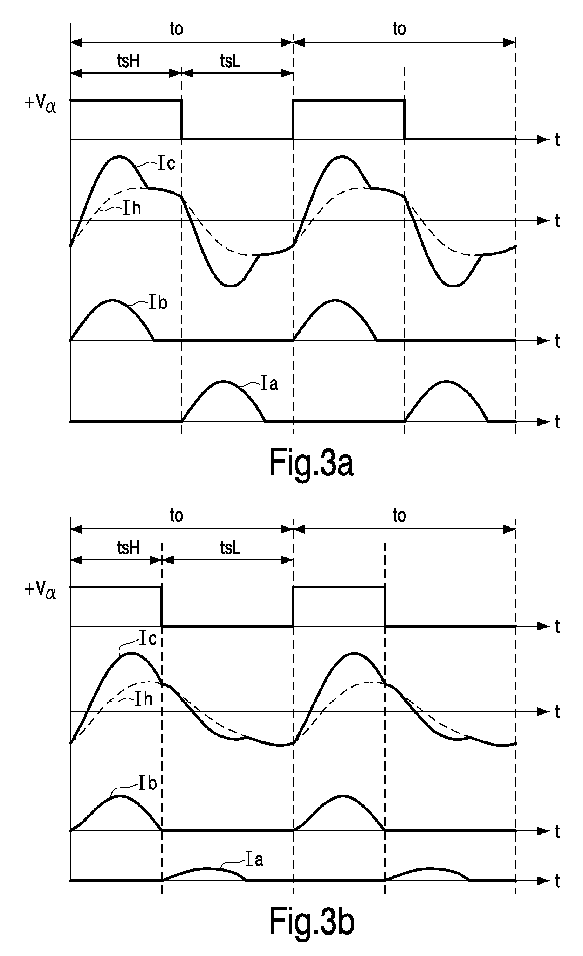

Hierbei wird der Wechselrichter 12 durch die Regeleinrichtung 22 so angesteuert, dass er eine pulsweitenmodulierte Spannung erzeugt. Der zeitliche Verlauf einer solchen pulsweitenmodulierten Spannung ist in Figur 3a oben dargestellt. Innerhalb eines Zeitintervalls der Länge t0 ist zunächst der obere Schalter der Halbbrücke geschlossen, so dass ein positiver Spannungspuls der Amplitude +Vdc entsteht. Dieser Puls weist eine Dauer tsH auf. Anschließend wird der obere Schalter geöffnet und der untere Schalter geschlossen, so dass für eine Dauer tsL die Spannung Null anliegt. Bei konstanter Amplitude Vdc, vorgegeben durch die entsprechende Gleichspannungsquelle Vdc in Fig. 1, ist der Zeitverlauf der pulsweitenmodulierten Spannung durch die Parameter Schaltfrequenz f mit f=1/t0 und Tastgrad $\delta$ mit $\delta$ =tsH/t0 festgelegt. Alternativ wird der Zeitverlauf auch durch Vorgabe der Zeiten tsH, tsL vollständig festgelegt. Im Beispiel von Fig. 3a beträgt der Tastgrad 50%.

Der in Fig. 3a gezeigte Verlauf einer pulsweitenmodulierten Spannung ist selbstverständlich idealisiert. Tatsächlich gibt es beim Umschalten zur Vermeidung von Kurzschlüssen Totzeiten, in denen keiner der Schalter geschlossen ist. Zudem können die Pulsflanken in der Praxis nicht momentan ansteigen, sondern es ergeben sich Verläufe mit endlichen Anstiegszeiten, so dass die Spannungspulse etwa Trapezform annehmen.

Bei dem resonanten Konverter 10 nach Figur 1 ist es möglich, die beiden Ausgangsspannungen Vab1, Vb1 getrennt voneinander zu regeln. Die beiden Spannungen Vab1, Vb1 sind hierbei von den Sekundärspannungen Va, Vb der Sekundäreinheiten 20a, 20b entgegengesetzten Typs abhängig. Daher kann, wie nachfolgend erläutert wird, durch geeignete Vorgabe der Parameter der pulsweitenmodulierten Spannung (f, $\delta$ bzw. tsH, tsL) eine solche Ansteuerung vorgegeben werden, dass die Ausgangsspannungen Vab1, Vb1 unabhängig voneinander auf dem jeweiligen Sollwert geregelt werden können.

Wie bereits erwähnt handelt es sich bei Konverter 10 um eine resonante Topologie mit einem Serienkondensator $C_S$. Diese weist eine lastabhängige Resonanzfrequenz auf, wobei der Wert der Resonanzfrequenz im unbelasteten Fall aufgrund der verwendeten Komponenten zumindest näherungsweise bekannt ist. Der Betrieb der Schaltung erfolgt bei Schaltfrequenzen f, die deutlich oberhalb der jeweiligen Resonanzfrequenzen liegen. In diesem Betriebsbereich tritt bereits eine gewisse resonante Spannungsüberhöhung auf. Durch Anregung der Resonanzanordnung 14 durch eine geringere Frequenz, die damit näher an die Resonanzfrequenz heranrückt, wird die Resonanzüberhöhung stärker, so dass die Sekundärspannungen Va, Vb ansteigen. Aufgrund der zwei gegensätzlichen Typen von Sekundäreinheiten 20a, 20b ist es hierbei möglich, durch zusätzliche Vorgabe des Tastgrades $\delta$ eine der

Sekundärspannungen Va, Vb gegenüber der anderen zu erhöhen oder absinken zu lassen. Dies wird nachfolgend anhand der Fig. 3a - 3c erläutert:

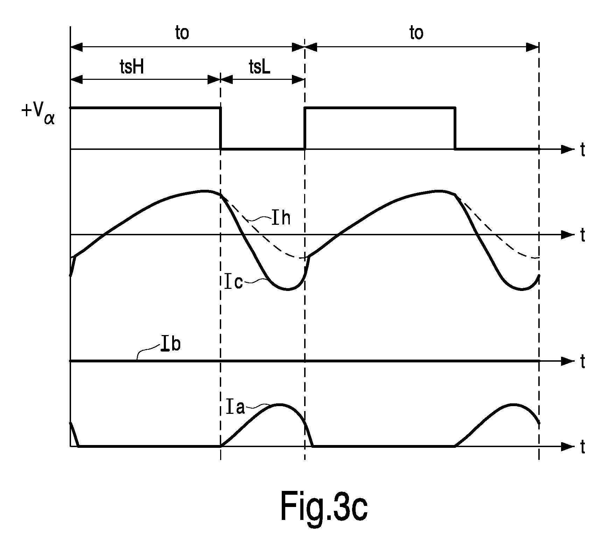

Die Fig. 3a, 3b, 3c zeigen, wie durch Anpassung von Frequenz f bzw. der Periodendauer t0 = 1/f und des Tastgrads δ eine Regelung der Sekundärspannungen Va und Vb ermöglicht wird. Für zwei Zeitperioden t0 sind jeweils die Verläufe der Ausgangsspannung des Wechselrichters 12 (Anregungsspannung an der Resonanzanordnung 14), des Stroms Ic durch den Kondensator $C_S$, des Magnetisierungsstroms Ih durch die Hauptinduktivität Lh des Transformators 16, des von der Sekundärwicklung 18a gelieferten Stromes Ia und des von der Sekundärwicklung 18b gelieferten Stromes Ib dargestellt. Der in den Figuren 3a, 3b, 3c angegebene Verlauf soll hier lediglich zur Erläuterung des Prinzips dienen, nach dem die beiden Ausgänge unabhängig voneinander geregelt werden. Die dargestellten Zeitverläufe zeigen die entsprechenden Größen unter der Annahme, dass alle Windungsverhältnisse gleich eins und die Größen der beiden Sekundäreinheiten 20a, 20b identisch sind, d. h. Va = Vb. Weiter werden identische ausgangsseitige Serien-Induktivitäten angenommen.

Fig. 3a zeigt den Betriebszustand, bei der die Frequenz f0 = 1/t0 auf das 1,47 fache von fr eingestellt ist, wobei fr die Resonanzfrequenz des unbelasteten Konverters 10 ist und sich näherungsweise zu

$$fr = \frac{1}{2\pi} \sqrt{\frac{1}{C[Lps + Lh]}}$$

bestimmt, wobei C die Kapazität des Kondensators $C_S$, Lps der Wert der primärseitigen Serien-Induktivität und Lh der Wert der Hauptinduktivität des Transformators 16 ist. Obige Gleichung gilt allerdings nur für den Fall des ausgangsseitig unbelasteten Konverters. Bei ausgangsseitiger Belastung ergibt sich eine von den ausgangsseitigen Streuinduktivitäten und im Allgemeinen auch an der Last abhängige Verschiebung. Die genaue Resonanzfrequenz für den belasteten Konverter 10 zu ermitteln ist relativ aufwendig. Daher wird lediglich die oben angegebene Resonanzfrequenz fr als Bezugsgröße für die Frequenz verwendet.

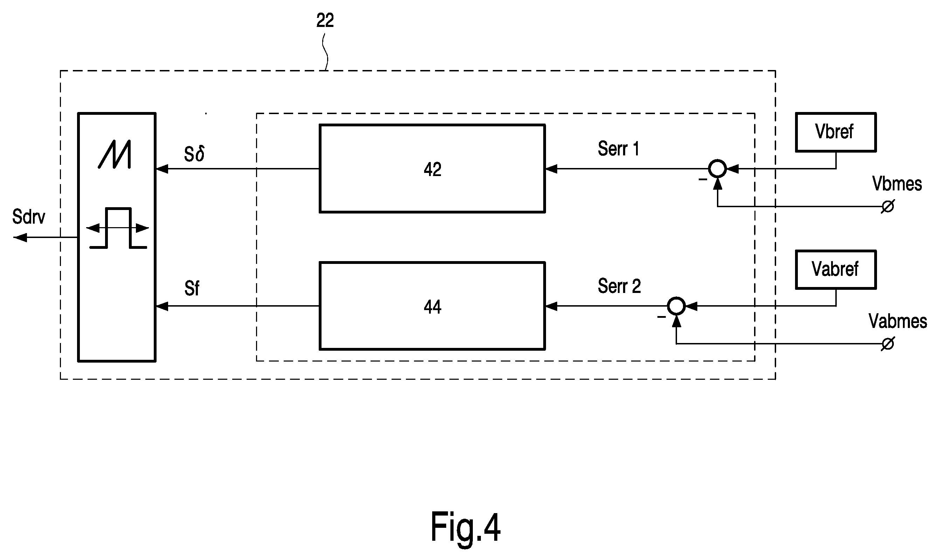

Das Tastverhältnis ist im Betriebsfall gemäß Fig. 3a zu 50 % gewählt. In diesem Betriebszustand werden in den Zeiträumen tsH bzw. tsL Stromverläufe von Ia und Ib mit (nahezu) identischen Halbwellen während der Zeiträume tsH bzw. tsL erzeugt. Beim Betriebszustand gemäß Fig. 3b ist die Frequenz f0 = 1 / t0 auf das 1,53fache von fr erhöht. Das Tastverhältnis ist auf 40 % reduziert. Gegenüber dem Betriebszustand gemäß Fig. 3a ist der Verlauf des Stroms Ib nahezu gleichgeblieben. Der Verlauf des Stromes Ia weist nun Halbwellen mit reduzierter Amplitude auf, so dass die über die Sekundärwicklung 18a zum Ausgang der zweiten Sekundäreinheit 20a transportierte Leistung reduziert ist. Fig. 3c zeigt einen Betriebsfall mit einer Frequenz f0 = 1 / t0 gleich dem 1,55fachen von fr und einem Tastverhältnis von 65 %. In diesem Betriebsfall ist der Strom Ib im wesentlichen auf Null reduziert und die Amplitude der Halbwellen von Ia sind gegenüber Fig. 3b erhöht, so dass in diesem Betriebsfall von der Sekundärwicklung 18b keine Leistung zum Ausgang der ersten Sekundäreinheit 20b, jedoch von der Sekundärwicklung 18a eine gegenüber Fig. 4b erhöhte Leistung von der Sekundärwicklung 18a zum Ausgang der zweiten Sekundäreinheit 20a transportiert wird.

Die beispielhaften Betriebszustände gemäß der Fig. 3a - 3c machen deutlich, dass mit der Konverterschaltung nach Fig. 1 eine sehr variable Anpassung an unterschiedliche Belastungen der verschiedenen Konverterausgänge möglich ist. Mit einem solchen Konverter lassen sich insbesondere auch bei kleinen Ausgangsspannungen und großen Ausgangsströmen, wie sie von modernen Mikroprozessoren benötigt werden, geringe Toleranzen der Ausgangsspannungen erreichen.

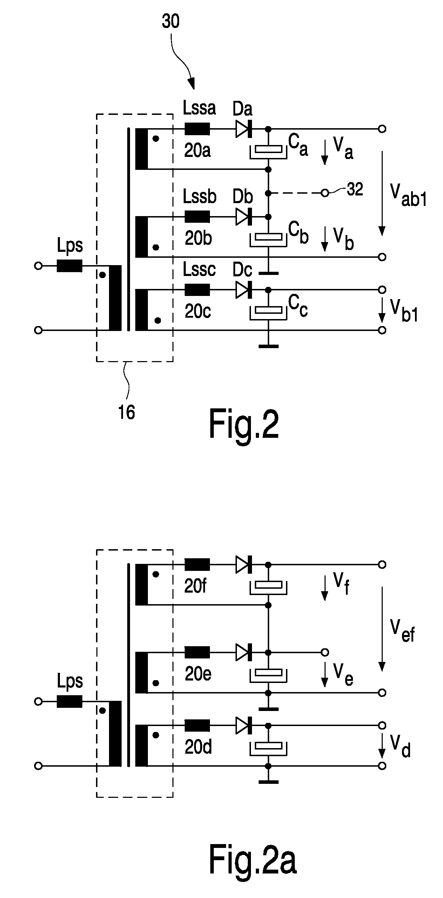

In Fig. 2 ist ein Teil einer zweiten Ausführungsform eines resonanten Konverters 30 gezeigt. Dargestellt ist hierbei nur der Transformator 16 und dessen sekundärseitige Beschaltung. Die übrigen Elemente sind mit der Schaltung 10 nach Fig. 1 identisch und daher nicht gesondert dargestellt.

Im Gegensatz zum Konverter 10 gemäß der ersten Ausführungsform weist der Konverter 30 drei Sekundäreinheiten 20a, 20b, 20c auf. Die Sekundäreinheiten 20b, 20c sind Sekundäreinheiten ersten Typs, die Sekundäreinheit 20a ist eine Sekundäreinheit zweiten Typs. Dies ist in Fig. 2 anhand der jeweiligen Wicklungsorientierung (gekennzeichnet durch einen Punkt) im Zusammenhang mit der sonst identischen Beschaltung erkennbar.

Wie bei der ersten Ausführungsform wird auch bei der zweiten Ausführungsform die erste Ausgangsspannung Vb1 an einem direkten Ausgang geliefert, der hier von der Sekundäreinheit ersten Typs 20c geliefert wird. Die erste Ausgangsspannung Vb1 wird an der Filterkapazität Cc gefiltert. Die zweite Ausgangsspannung Vab1 wird an einem Stapel-Ausgang geliefert, für den die Sekundäreinheiten 20a, 20b, jeweils mit Filterkapazitäten Ca, Cb in Reihe geschaltet sind, so dass die Ausgangsspannung Vab1 der Summe der Sekundärspannungen Va, Vb entspricht.

Die zweite Ausführungsform eines Konverters 30 unterscheidet sich von der ersten Ausführungsform dadurch, dass der direkte Ausgang durch eine separate Sekundäreinheit 20c gespeist wird, die nicht Teil der den Stapel-Ausgang speisenden Sekundäreinheiten 20a, 20b ist. Der direkte Ausgang kann in diesem Fall sogar vom Stapel-Ausgang galvanisch getrennt sein. Allerdings werden bei der zweiten Ausführungsform für zwei Ausgänge Vab1, Vb1 drei Dioden Da, Db, Dc benötigt, während bei der ersten Ausführungsform für zwei Ausgänge nur zwei Dioden benötigt werden.

Die ersten und zweiten Ausführungsformen nach den Figuren 1 und 2 zeigen jeweils Konverter mit lediglich zwei Ausgangsspannungen, die unabhängig voneinander regelbar sind. In der Praxis werden jedoch häufig Konverter benötigt, die eine Vielzahl von Ausgangsspannungen, beispielsweise zehn oder mehr verschiedene Ausgangsspannungen erzeugen können. Dies ist mit den Konvertern 10, bzw. 30 aus den Figuren 1 und 2 möglich, indem weitere Sekundäreinheiten, jeweils bestehend aus Sekundärwicklung und Gleichrichtelement, hinzugefügt werden. Hierfür werden weitere Sekundärwicklungen auf den Kern des Transformators 16 aufgebracht und als Sekundäreinheiten beschaltet. Die Ausgangsspannungen werden in zwei Gruppen eingeteilt, wobei die Ausgangsspannungen der ersten Gruppe an direkten Ausgängen von Sekundärelementen ersten Typs und die Ausgangsspannungen der zweiten Gruppe an Stapelausgängen von Sekundärelementen ersten und zweiten Typs erzeugt werden. Die beiden Gruppen von Ausgangsspannungen sind dann jeweils getrennt von der anderen Gruppe regelbar. Innerhalb der Gruppe hängen die Ausgangsspannungen allerdings über das Verhältnis der Windungszahlen der jeweiligen Sekundärwindungen fest miteinander zusammen. Daher wird bei der Regelung nur jeweils eine Spannung der ersten und eine der zweiten Gruppe berücksichtigt. Die übrigen Spannungen werden hierbei "mitgeregelt".

Hierbei können auch die verschiedenen Arten der Beschaltung der Sekundäreinheiten gemäß den Fig. 1 und 2 kombiniert werden.

Ein Beispiel für einen Konverter mit drei Ausgangsspannungen ist in Fig. 2 angedeutet durch die gestrichelt eingezeichnete Ausgangsklemme 32, an der die Spannung Va abgegriffen werden kann. Der so ausgestaltete Konverter stellt drei Ausgangsspannungen Va, Vb1, Vab1 zur Verfügung, von denen die Ausgangsspannung Vb1 an einem direkten Ausgang der Sekundäreinheit ersten Typs 20c, die Spannung Va an einem direkten Ausgang der Sekundäreinheit zweiten Typs 20a und die Spannung Vab1 an einem Stapel-Ausgang aus den Sekundäreinheiten 20a, 20b entgegengesetzten Typs abgegriffen wird.

Fig. 2a zeigt eine weitere alternative Ausführungsform eines Konverters. Die Schaltung entspricht weitgehend Fig. 2 und wird daher nicht mehr im Detail erläutert.

Der in Fig. 2a dargestellte Konverter umfasst sekundärseitig Sekundäreinheiten 20d, 20e, 20f, von denen die Sekundäreinheit 20e eine Sekundäreinheit ersten Typs und die Sekundäreinheiten 20d, 20f Sekundäreinheiten zweiten Typs sind. Die Sekundäreinheit zweiten Typs 20d liefert die Spannung Vd in Form eines direkten Ausgangs. Die Sekundäreinheiten 20e, 20f liefern in Form von direkten Ausgängen die Ausgangsspannungen Vf, Ve und sind zusätzlich in Reihe geschaltet, so dass sie in Form eines Stapelausgangs die Ausgangsspannung Vef liefern. Damit unterscheidet sich der in Fig. 2a dargestellte Konverter von dem Konverter 30 nach Fig. 2 lediglich durch die Orientierung der unten dargestellten Sekundäreinheit 20d.

Für die Ausführungsform nach Fig. 2a soll eine Anwendung als Beispiel dargestellt werden. Für die Versorgung eines LCD-Monitors wird an einem Ausgang für das Panel eine Nennspannung von 12 Volt und ca. ¾ der Gesamtleistung benötigt. Zwei weitere Spannungen von 3,3 und 5 Volt und etwa gleicher Leistung werden für Signalverarbeitungszwecke benötigt. Die Stromversorgung des LCD-Monitors kann mit der in Fig. 2a dargestellten Schaltung erfolgen. Der Ausgang Vef wird hierbei so ausgelegt, dass die Nennspannung die für die Versorgung des Panels benötigten 12 Volt beträgt. Die Ausgangsspannung Ve wird beispielsweise auf 3,3 und die Ausgangsspannung Vd auf 5 Volt ausgelegt.

Ausgehend von einer Verteilung der Nennleistung Pef = 2/3 Ptot und Pe = Pd = 1/6 Ptot summiert sich die Belastung der mit der Sekundäreinheit ersten Typs 20e assoziierten Halbwelle zu Phwb = ½ * Pef + Pe = ½ Ptot, und die Belastung der mit den Sekundäreinheiten zweiten Typs 20d, 20f assoziierten Halbwelle zu Phwa = ½ * Pef + Pd = ½ Ptot, d. h. es liegt eine gleichmäßige Belastung vor.

Dies ist ein Beispiel dafür, wie ausgehend von den Anforderungen die Verteilung der Ausgänge so gewählt werden kann, dass eine möglichst gleichmäßige Belastung der jeweiligen Halbwellen erfolgt. In einem konkreten Anwendungsfall ist zusätzlich zu beachten, dass sich für die Auswahl der Ausgangskonfiguration und der direkt zu regelnden Ausgänge zum Kriterium der symmetrischen Nennleistungs-Belastung in der Praxis noch weitere gesellen. Dies umfasst die Anpassung der Windungszahlen der einzelnen Wicklungen auf die jeweiligen Spannungen (nicht stufenlos einstellbar), die resultierenden (evtl. unsymmetrischen) oder zu dimensionierenden Ausgangsinduktivitäten und der Umgang mit Bauteiltoleranzen sowie den zulässigen Ausgangsspannungstoleranzen. Der Fachmann wird daher in jedem Einzelfall zu überprüfen haben, welche Ausgangskonfiguration die jeweiligen Anforderungen erfüllt.

Nachfolgend wird auf die Regeleinrichtung 22 eingegangen. Ein Blockdiagramm, das den Aufbau einer ersten Ausführungsform dieser Regeleinrichtung darstellt, ist in Fig. 4 gezeigt.

An den Eingängen nimmt die Regeleinrichtung 22 zwei Spannungsmesssignale Vabmes, Vbmes auf. Bei dem Messsignal Vabmes handelt es sich um das Spannungsmesssignal der Ausgangsspannung Vab1 des Stapel-Ausgangs, beim Messsignal Vbmes handelt es sich um das Messsignal für die Ausgangsspannung Vb1 des direkten Ausgangs. Die Messsignale werden mit Sollwerten Vbref, Vabref verglichen und Regeldifferenzen Serr1, Serr2 gebildet.

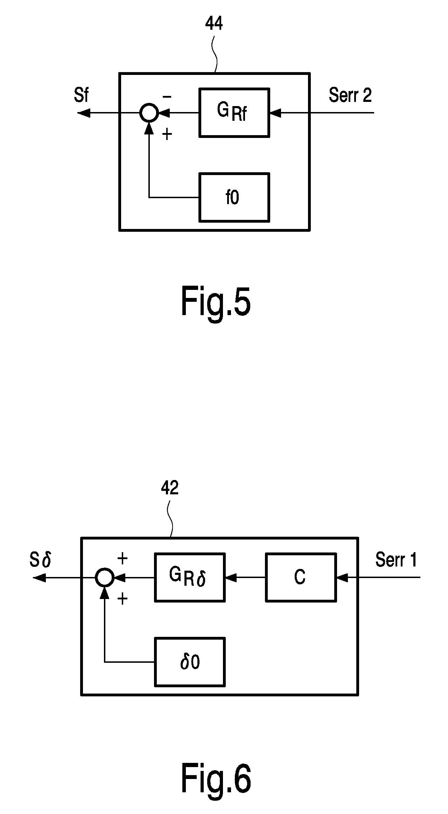

Die Regeldifferenz Serr1 der Ausgangsspannung am direkten Ausgang wird einem Tastgrad-Regler 42, die Regeldifferenz Serr2 der Ausgangsspannung am Stapel-Ausgang einem Frequenz-Regler 44 zugeführt. Der Tastgrad-Regler 42 liefert ausgehend von der Regeldifferenz Serr1 eine Vorgabe Sδ für den Tastgrad. Die Struktur des Reglers 42 ist in Fig. 6 dargestellt. Ausgehend von einer Grundvorgabe δ0 von beispielsweise 50% korrigiert der eindimensionale Regler GRδ (beispielsweise ein eindimensionaler I-, PI- oder PID-Regler) die Vorgabe Sδ für den Tastgrad je nach Fehler Serr1, wobei aufgrund des Integralanteils in GRδ auch eine bleibende Regelabweichung korrigiert wird und so die Vorgabe δ 0 keinen Einfluss auf die Regelgenauigkeit hat.

Das Fehlersignal Serr1 wird innerhalb des Reglers 42 mit einer Strukturkonstanten c multipliziert. Hierbei ist c=+1, wenn Vbmes das Messsignal einer durch eine Sekundäreinheit 20b ersten Typs gespeisten Ausgangs ist. Ist Vbmes das Messsignal eines durch eine Sekundäreinheit 20a zweiten Typs gespeisten Ausgangs, nimmt die Konstante c den Wert -1 an. Dies erklärt sich im Zusammenhang mit den oben gegebenen Erläuterungen zu den Fig. 3a - 3c, bei denen je nach Vergrößerung bzw. Verkleinerung des Tastgrades eine größere bzw. kleinere Leistung über die Sekundäreinheiten entgegengesetzten Typs ausgegeben wurde.

Die Regeldifferenz Serr2 des Stapel-Ausgangs wird dem Frequenz-Regler 44 zugeführt. Dessen Struktur ist in Fig. 5 dargestellt. Ein I-, PI- oder PID-Regler GRf gibt hierbei eine Abweichung von einer Grundvorgabe f0 vor.

Die Vorgabewerte Sδ, Sf werden einem Modulator M zugeführt, der hieraus ein Pulssignal Sdrv erzeugt. Das Pulssignal Sdrv dient in Fig. 1 zur Steuerung des Treibers 24, der den Wechselrichter 12 ansteuert. Der Modulator M erzeugt hierbei ein solches Pulssignal Sdrv, dass die Vorgaben Sδ für den Tastgrad und Sf für die Frequenz die entsprechenden Größen in der vom Wechselrichter erzeugten geschalteten Wechselspannung vorgeben.

Das folgende Beispiel soll die Funktionsweise der Regelung erläutern:

Sinkt beispielsweise in Fig. 1 die Ausgangsspannung Vab1 am Stapel-Ausgang unter ihren Sollwert ab, so dass die Differenz Vabref- Vabmes einen positiven Wert hat, so wird dieser positive Wert als Serr2 dem Frequenz-Regler 44 zugeführt. Dies führt (vgl. Fig. 5) zu einer Verringerung des Vorgabewerts Sf für die Frequenz. Der entsprechend angesteuerte Modulator M sorgt über das Signal Sdrv dafür, dass vom Wechselrichter 12 eine pulsweitenmodulierte Spannung geringerer Frequenz erzeugt wird. Die Frequenz liegt näher an der Resonanz der Resonanzanordnung 14, so dass beide Sekundärspannungen Va, Vb erhöht werden. Da die Ausgangsspannung Vab1 der Summe der Spannungen Va, Vb entspricht, steigt diese Spannung entsprechend an, so dass die diesbezügliche Regelabweichung ausgeregelt ist.

Durch die Verringerung der Frequenz ist jedoch auch die Ausgangsspannung Vb1 angestiegen, so dass es nun hier zu einer negativen Regelabweichung Serr1 kommt. Dies führt (im vorliegenden Beispiel hat die Strukturkonstante C den Wert +1) zu einer Erhöhung des Tastgrads, so dass (siehe Fig. 3b) die Ausgangsspannung Vb1 absinkt und beide Regeldifferenzen Serr1, Serr2 wieder Null sind.

In einer alternativen Ausführungsform der Regelung (nicht dargestellt) wird die Spannung am Stapelausgang nicht direkt gemessen und geregelt, sondern es werden zwei Sekundärspannungen von zwei Sekundäreinheiten entgegengesetzten Typs, beispielsweise die Sekundärspannungen Va, Vb in Fig. 1 jeweils gemessen und geregelt, wodurch die Ausgangsspannung Vab1 am Stapel-Ausgang als Summe der beiden Spannungen "mitgeregelt" wird. Die Regelung der Sekundärspannungen Va, Vb getrennt voneinander ist durch entsprechende Vorgabe von Frequenz und Tastgrad möglich, wie Figuren 3a-3c zeigen. Bei der entsprechenden Regeleinrichtung werden für beide Sekundärspannungen Va, Vb Regeldifferenzen gebildet, wobei aus der Summe dieser Regeldifferenzen mit einem eindimensionalen Regler eine Vorgabe für die Frequenz und aus der Differenz dieser Regeldifferenzen mit einem weiteren eindimensionalen Regler eine Vorgabe für den Tastgrad ermittelt wird.

Ein Schaltnetzteil wird mit dem dargestellten resonanten Konverter aufgebaut, indem eine der dem Fachmann bekannten Netzteileingangsschaltungen (beispielsweise ein Netzgleichrichter und ggfs. Glättungskapazität) aus der Netzspannung eine nicht stabilisierte Zwischenkreisgleichspannung erzeugt. Die resonanten Konverter 10, 30 werden durch diese Zwischenkreisgleichspannung Vdc gespeist.

Die Erfindung lässt sich dahingehend zusammenfassen, dass ein resonanter Konverter, ein Regelverfahren für einen resonanten Konverter und ein Schaltnetzteil mit einem resonanten Konverter vorgestellt werden. Der Konverter umfasst einen Wechselrichter zur Erzeugung einer Wechselspannung, durch die eine Resonanzanordnung mit einer Kapazität und einem Transformator gespeist ist. Die Schaltung sieht zwei Typen von Sekundäreinheiten vor, umfassend jeweils eine Sekundärwicklung des Transformators und mindestens ein Gleichrichtelement. Sekundäreinheiten ersten und zweiten Typs unterscheiden sich hierbei durch entgegengesetzte Orientierung, beispielsweise entgegengesetzte Wicklungsrichtung oder entgegengesetzt orientierte Beschaltung. Ausgangsseitig werden mindestens zwei Ausgangsspannungen geliefert, von denen eine erste Ausgangsspannung als direkter Ausgang von einer Sekundäreinheit ersten Typs gespeist wird und eine zweite Ausgangsspannung als "Stapel-Ausgang" von einer Sekundäreinheit ersten und einer Sekundäreinheit zweiten Typs gespeist ist, bevorzugt als Reihen-Schaltung dieser Sekundäreinheiten. Hierbei ist der Stapel-Ausgang zur Lieferung größerer Leistung, der direkte Ausgang für geringere Ausgangsleistungen ausgelegt. Mit einer Regeleinrichtung können die beiden Ausgangsspannungen getrennt voneinander geregelt werden, wobei die Regeleinrichtung die Ansteuerung des Wechselrichters, bevorzugt zur Lieferung einer pulsweitenmodulierten Spannung, vorgibt. Beispielsweise durch geeignete Wahl von Frequenz und Tastgrad der pulsweitenmodulierten Spannung können die Spannungen unabhängig voneinander auf Sollwerte geregelt werden.

**Patentansprüche**

1. Resonanter Konverter mit

   - einem Wechselrichter (12) zur Erzeugung einer Wechselspannung
   - und einer durch die Wechselspannung gespeisten Resonanzanordnung (14) mit mindestens einer Kapazität ($C_S$) und mindestens einem Transformator (16),
   - wobei mindestens zwei Typen von Sekundäreinheiten (20a, 20b) vorgesehen sind, gebildet jeweils mindestens aus einer Sekundärwicklung (18a, 18b) des Transformators (16) und mindestens einem Gleichrichtelement (Da, Db), wobei sich Sekundäreinheiten ersten (20b) und zweiten (20a) Typs durch entgegengesetzte Orientierung unterscheiden,
   - und wobei mindestens zwei Ausgangsspannungen geliefert werden, von denen eine erste Ausgangsspannung (Vb) von einer Sekundäreinheit ersten Typs (20b) geliefert wird
   - und eine zweite Ausgangsspannung (Vab1) von einer Sekundäreinheit (20b) ersten Typs und einer Sekundäreinheit (20a) zweiten Typs geliefert wird.

2. Resonanter Konverter nach Anspruch 1, bei dem

   - eine Regeleinrichtung (22) zur Regelung der beiden Ausgangsspannungen (Vb1, Vab1) jeweils auf einen Sollwert (Vbref, Vabref) vorgesehen ist,
   - wobei die Regeleinrichtung (22) so ausgebildet ist, dass sie die Ansteuerung des Wechselrichters (12) vorgibt.

3. Resonanter Konverter nach Anspruch 2, bei dem

   - die Regeleinrichtung (22) eine solche Ansteuerung des Wechselrichters (12) vorgibt,
   - dass eine pulsweitenmodulierte Spannung zur Speisung der Resonanzanordnung (14) geliefert wird.

4. Resonanter Konverter nach Anspruch 3, bei dem

   - die Regeleinrichtung (22) so ausgebildet ist, dass sie die Schaltfrequenz (f) und den Tastgrad ($\delta$) der pulsweitenmodulierten Spannung vorgibt.

5. Resonanter Konverter nach einem der Ansprüche 2 bis 4, bei dem

   - die Regeleinrichtung (22) so ausgebildet ist, dass sie Messwerte der ersten und der zweiten Ausgangsspannung (Vb1, Vab1) verarbeitet.

6. Resonanter Konverter nach einem der Ansprüche 2 bis 4, bei dem

   - die Regeleinrichtung (22) so ausgebildet ist, dass sie Messwerte der von einer Sekundäreinheit ersten Typs (20b) gelieferten ersten Ausgangsspannung (Vb1)
   - und Messwerte einer von einer Sekundäreinheit zweiten Typs (20a) gelieferten Ausgangsspannung verarbeitet.

7. Resonanter Konverter nach Anspruch 5, bei dem

   - die Regeleinrichtung (22) so ausgebildet ist, für die erste und zweite Ausgangsspannung (Vb1, Vab1) jeweils eine Regeldifferenz (Serr1, Serr2) gebildet wird,
   - wobei die Regeldifferenz (Serr1) der ersten Ausgangsspannung (Vb1) zur Berechnung der Vorgabe für den Tastgrad ($\delta$)
   - und die Regeldifferenz (Serr2) der zweiten Ausgangsspannung (Vab1) zur Berechnung der Vorgabe für die Schaltfrequenz (f) verwendet wird.

8. Resonanter Konverter nach einem der vorangehenden Ansprüche, bei dem

   - die erste Ausgangsspannung (Vb1) von einer ersten Sekundäreinheit (20b) ersten Typs geliefert wird
   - und die zweite Ausgangsspannung (Vab1) von der ersten Sekundäreinheit (20b) in Reihe mit mindestens einer Sekundäreinheit (20a) zweiten Typs geliefert wird.

9. Resonanter Konverter nach einem Ansprüche 1-7, bei dem

   - die erste Ausgangsspannung (Vb1) von einer ersten Sekundäreinheit (20c) ersten Typs geliefert wird
   - und die zweite Ausgangsspannung (Vab1) von einer zweiten Sekundäreinheit (20b) ersten Typs in Reihe mit mindestens einer dritten Sekundäreinheit (20a) zweiten Typs geliefert wird.

10. Regelverfahren für einen resonanten Konverter, bei dem

- der Konverter (10, 30) einen Wechselrichter (12) zur Erzeugung einer Wechselspannung und eine durch die Wechselspannung gespeiste Resonanzanordnung (14) mit mindestens einer Kapazität ($C_S$) und mindestens einem Transformator (16) aufweist,
- wobei mindestens zwei Typen von Sekundäreinheiten (20a, 20b) vorgesehen sind, gebildet jeweils mindestens aus einer Sekundärwicklung (18a, 18b) des Transformators (16) und mindestens einem Gleichrichtelement (Da, Db), wobei sich Sekundäreinheiten ersten (20b) und zweiten (20a) Typs durch entgegengesetzte Orientierung unterscheiden,
- und wobei mindestens zwei Ausgangsspannungen geliefert werden, von denen eine erste Ausgangsspannung (Vb1) von einer Sekundäreinheit ersten Typs (20b) geliefert wird
- und eine zweite Ausgangsspannung (Vab1) von einer Sekundäreinheit (20b) ersten Typs und einer Sekundäreinheit (20a) zweiten Typs geliefert wird,
- bei dem zur Regelung der ersten und zweiten Ausgangsspannung jeweils auf einen Sollwert die Ansteuerung des Wechselrichters (12) vorgegeben wird.

**11.** Schaltnetzteil mit

- einer Netzteileingangsschaltung zum Anschluss an das Stromversorgungsnetz und zur Lieferung einer Zwischenkreisgleichspannung (Vdc)
- und einem resonanten Konverter (10, 30) nach einem der Ansprüche 1-9, der durch die Zwischenkreisgleichspannung gespeist ist.

Fig.1

Fig.2

Fig.2a

Fig.3a

Fig.3b

Fig.3c

Fig.4

EP 1 303 032 A2

44

Sf ← ⊖ — ← $G_{Rf}$ ← Serr 2
+

f0

## Fig.5

42

Sδ ← ⊕ + ← $G_{Rδ}$ ← C ← Serr 1
+

δ0

## Fig.6